# EUROPEAN PATENT APPLICATION

(11) **EP 1 486 153 A1**
(43) Date of publication of application: **15.12.2004**
(21) Application number: 04253396.8
(22) Date of filing: 08.06.2004
(51) Int. Cl.: A47J 43/07, A21B 7/00, A21C 1/02, A21C 1/14, B01F 15/00

(54) **Bread-making kitchen appliance and blade arrangement therefor**

(30) Priority: 10.06.2003 GB 0313284; 01.03.2004 GB 0404468
(71) Applicant: Kenwood Marks Limited, Havant, Hampshire PO9 2NH (GB)
(72) Inventor: Clark, Simon Kenwood Marks Limited, Havant Hampshire P09 2NH (GB); Mosley, Stephen Kenwood Marks Limited, Havant Hampshire P09 2NH (GB)
(74) Representative: Marsh, Robin Geoffrey

(57) **Abstract**

This invention provides a kitchen appliance for making bread and, in particular, a blade arrangement for kneading or mixing ingredients in a container prior to and/or during the baking process. Blade arrangements are known in which a generally flat blade can assume a generally upright (raised) position during a mixing phase and a substantially flat (rest) position during a subsequent baking phase. In order to ensure reliable and automatic deployment of the blade into its generally upright position for mixing, the invention provides a blade arrangement having a blade (8) formed with first (11) and second (9) substantially planar portions; the first portion being a leading portion (11) with respect to a first direction of motion of the arrangement relative to the ingredients and being inclined to the second portion (9) such that pressures resulting from contact between the inclined portion of the blade and the ingredients during such motion raises the blade towards the generally upright position. In preferred embodiments, the first portion (11) is inclined to the second portion (9) at an angle (α) in the range from 27 degrees to 47 degrees inclusive.

## Description

This invention relates to kitchen appliances for making bread, and it relates in particular to a blade arrangement for kneading or mixing ingredients in a container prior to and/or during the baking process.

Whilst domestic bread-making appliances are well known and generally efficient, especially bearing in mind the typical prices at which such appliances are made and sold, they can exhibit certain disadvantages. In particular, blades driven from beneath the container and used to knead, stir or mix the ingredients, tend to spoil the bread surface by forming voids therein.

Australian Patent No. 756226 describes a bread-making appliance having a blade having a flat surface which can assume a generally upright (raised) position during a mixing phase and a substantially flat (rest) position during a subsequent baking phase. The blade is hinged to the base of the container, and is capable of bi-directional rotation, relative to the container and its contents, about a vertical axis intersecting the substantially horizontally-extending line of the hinge. The blade may be raised manually to the upright position prior to the mixing phase or it may be formed with a slight curvature, shown in the patent drawings as being about an axis that is parallel to the line of the hinge, such that, according to the patent specification, when the blade is rotated in the clockwise direction, designated for mixing, dough caught beneath the curve of the blade forces it upwards; the blade eventually encountering a stop when the blade reaches the upright (raised) position in which it is deployed for mixing.

In either event, counter-clockwise rotation of the blade, relative to the container and its contents, apparently forces the blade away from the stop and back to its lowered (rest) position.

Difficulties arise, however, in ensuring that automatic deployment of the blade into its generally upright (raised) position for mixing is reliably achieved, and it is an object of the invention to provide a blade arrangement for a bread-making kitchen appliance which overcomes or reduces such difficulties. The invention also aims to provide a bread-making kitchen appliance incorporating such a blade arrangement.

According to the invention from one aspect there is provided a blade arrangement for mixing, kneading and/or stirring ingredients in a bread-making kitchen appliance, wherein said blade is formed with first and second substantially planar portions thereof, wherein said first portion is a leading portion of said blade with respect to a first direction of motion of said blade relative to said ingredients, intended for mixing, kneading or stirring said ingredients, and wherein said first portion is inclined to said second portion in a sense tending to cause said blade to assume a relatively upright mixing position with respect to said ingredients when rotated in said first direction.

According to the invention from another aspect there is provided a blade arrangement for mixing, kneading and/or stirring ingredients in a bread-making kitchen appliance, wherein said blade is formed with first and second substantially planar portions thereof, wherein said first portion is a leading portion of said blade with respect to an intended direction of motion of said blade relative to said ingredients, and wherein said first portion is inclined to said second portion at an angle in the range from 27 degrees to 47 degrees inclusive in a sense tending to cause said blade to assume a mixing position with respect to said ingredients when rotated in said direction.

By means of the arrangements described in either of the two immediately preceding paragraphs, the lifting of the blade into the mixing position is performed with an acceptable degree of reliability.

Preferably the said angle of inclination of said first and second portions to one another is 37 degrees.

Investigations have shown that angles of inclination less than 27 degrees provide insufficient lift to raise the blade consistently and reliably into the mixing position. Inclinations of greater than 47 degrees, on the other hand, can induce a build-up of material at the leading edge of the blade sufficient to destroy the intended lift.

Preferably, the arrangement is mounted for bi-directional rotation within a container in which ingredients are to be mixed, kneaded and/or otherwise processed.

It is further preferred that the arrangement is adapted and configured such that, in the presence of said ingredients, rotation in one direction causes the blade member to assume said raised (mixing) position and rotation in the other direction causes the blade member to assume the lowered (rest) position.

In an arrangement according to a further preferred embodiment of the invention, the blade member is hingedly mounted relative to the base of said container and has a substantially flat surface, adapted to lie adjacent said base when the blade member assumes said lowered position.

Preferably, a rear surface of that portion of the blade member which supports the leading edge is coated with a slick material such as polytetrafluoride (PTFE) provided to facilitate the movement of the blade member relative to the prepared mixture in the container when the blade member has returned to its lowered (rest) position after a mixing cycle.

If desired, the leading edge portion of the blade member may be additionally shaped and configured, for example to enhance initial contact with the ingredients to be mixed. In specific embodiments, the extreme leading edge portion may be chamfered so as to thin the leading edge and/or said portion may be further tilted with respect to the remainder of the portion 11, thereby creating a complex bend.

The invention further encompasses a bread-making kitchen appliance incorporating such a blade arrangement and means for mounting the same at or near the base of a container in which said ingredients can be processed.

Such an appliance may conveniently include means for effecting a change in rotational direction of the motor automatically at a predetermined point in the bread-making cycle.

Alternatively, the appliance may include means for effecting a change in rotational direction of the motor under manual control of a user, and the user actuation of said manual control is then preferably prompted by audible and/or visual warning means.

In order that the invention may be clearly understood and readily carried into effect, one embodiment thereof will now be described, by way of example only, with reference to the accompanying drawings, of which:
Figure 1 shows a central cross-section through a hinged blade and associated components, taken transverse to the line of the hinge, with the blade illustrated schematically in rest, intermediate and raised positions;
Figure 2 shows the blade and associated components of Figure 1, viewed in cross-section taken along the line of the hinge; with the blade illustrated in its raised position only;
Figure 3 shows, in side elevation, a blade in accordance with one example of the invention;
Figure 4 shows the blade of Figure 3 in end elevation, facing the leading edge portion thereof; and
Figure 5 shows in perspective and exploded view, the blade of Figures 2 and 3 together with associated components.

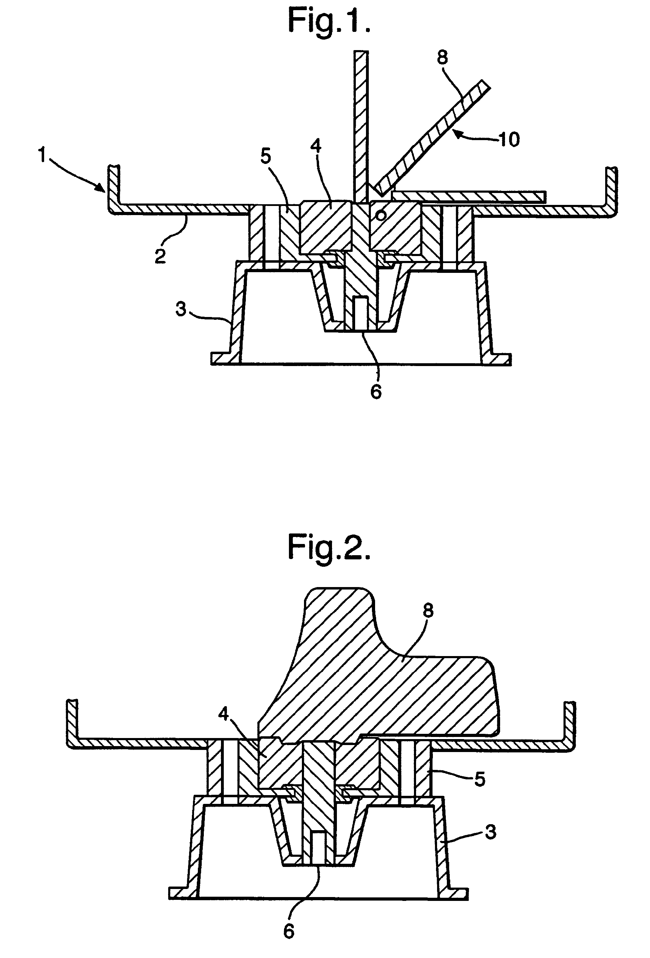

Referring now to Figures 1 and 2 of the drawings, a container 1 in which bread-making ingredients are intended to be mixed is provided, centrally of its base, with a bell housing 3 which covers an electric motor (not shown) and supports a driven member 4 journalled in a drive bearing 5. The driven member 4 supports a drive spigot 6 which is engaged by a shaft (not shown in Figures 1 and 2), driven by the motor and protruding into the bell housing 3.

The top surfaces of the driven member 4 and the bearing 5 are substantially flush with the upper surface of the base 2 of the container 1, so that the lower surface of the batch of ingredients (and later of the finished loaves) is not torn or otherwise damaged by the presence of significant discontinuities.

Hingedly mounted to the upper surface of the driven member 4 is a blade member 8. The member 8 is typically a relatively thin, substantially "L"-shaped blade member made of metal, such as stainless steel, approved for food contact. It tends to lie in a lowered (rest) position with its lower surface 10 flat against the upper surface of the driven member 4 and to the base 2 of the container 1. Indeed, the member 8 may be provided with a recess of complementary shape in the upper surface of the driven member 4 if it is desired to provide an almost completely flat and undisturbed surface at the base of the container.

The driven member 4 can be rotated clockwise or anti-clockwise by means of the aforementioned motor and drive shaft, though the predominant direction for mixing is, in this example, clockwise, whereupon pressure resulting from contact between the blade member and the materials to be mixed within the container 1 is intended to raise the blade member to an upright position for mixing.

At an appropriate point in the operating cycle of the bread-making process, when the mixing or kneading work is finished, the direction of rotation of the motor is briefly reversed, at which time the anticlockwise rotation of the member 8, with its flat surfaces encountering resistance provided by said ingredients, encourages the blade member to re-assume the lowered position.

It will be appreciated that Figure 1 shows the blade member 8 in three alternative positions; namely raised (mixing), lowered (rest) and at an intermediate point in its movement between the lowered and raised positions. The raised (mixing) and lowered (rest) positions are the principal positions adopted by the blade member 8 when the bread-maker is operating or at rest. The intermediate position is merely a transient position, occupied only briefly during transit of the blade member in one direction or the other between the other two positions.

The change in rotational direction of the motor may be effected automatically, at a given point in the bread-making cycle, or it may be effected manually in response to a switch actuated by the user, perhaps prompted by a warning light and/or buzzer.

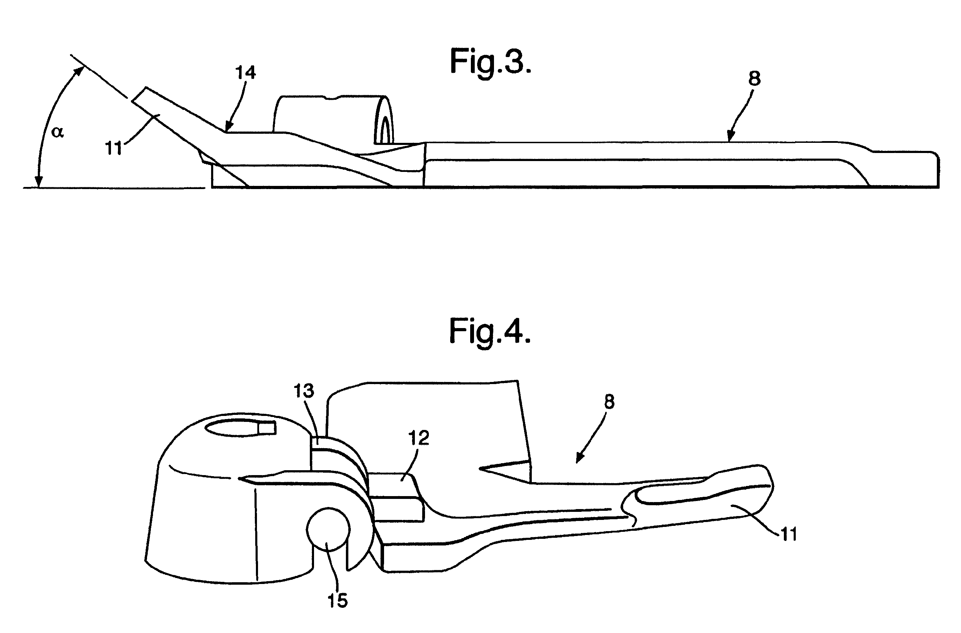

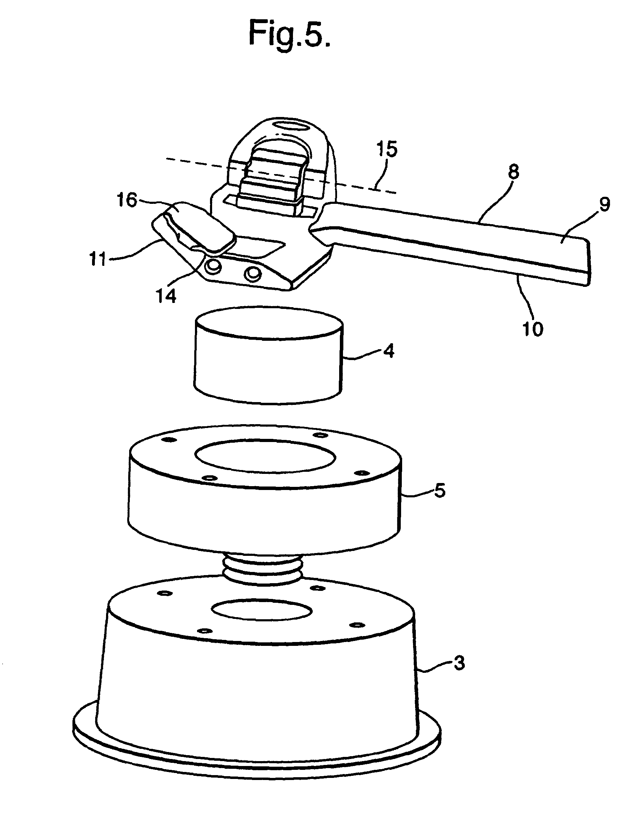

Referring now to Figures 3, 4 and 5, in accordance with an example of this invention, a portion 11 of the leading edge of the blade member 8, with regard to clockwise rotation, is shaped such that, when clockwise rotation occurs, contact between the leading edge portion 11 of the blade member 8 and the ingredients to be mixed in the container encourages the blade member 8 to hinge upwards through approximately 90 degrees and to adopt the raised (mixing) position, with a buffer platform 12 against a stop 13. In that raised position, the blade member 8 stands substantially upright, thereby to act as an efficient stirring implement to mix, knead or otherwise work the ingredients in the normal way.

In this specific example, the blade member 8 is formed with a leading edge portion 11 which is (in this specific example) lifted with respect to the remainder 9 of the surface of the blade member, in ramp-like manner, at an angle •, known as the attack angle, of around 37 degrees. Other angles in a range from 27 degrees to 47 degrees inclusive can be utilised if preferred.

The use of a ramp-like incline for the leading edge 11 gives rise in this example to a distinct bending line 14 on the blade member 8. Alternatively, the leading edge 11 itself, and/or its junction with the remainder of the blade member may be somewhat curved.

In any event, the inclination of the leading edge 11 occurs about an axis that is perpendicular to the line 15 about which the blade member is hinged, in contrast to the slight curvature envisaged in the aforementioned Australian patent and as shown in the drawings thereof, wherein the slight curvature is effected about an axis parallel to or coincident with the line of the blade member's hinge.

The rear surface of that portion of the blade member 8 which comprises the leading edge 11 is coated with a material 16 such as polytetrafluoride (PTFE), provided to facilitate the movement of the blade member relative to the prepared mixture in the container when the blade member 8 has returned to its lowered (rest) position after a mixing cycle. The slick PTFE surface 16 slides easily across the exposed surface of the mixture and does not tear or otherwise damage it, thereby avoiding the production of unsightly blemishes in the base of the bread.

If desired, the leading edge portion 11 of the blade member 8 may be additionally shaped and configured, for example to enhance initial contact with the ingredients to be mixed. In this respect, the leading edge portion 11 may be chamfered so as to thin the leading edge. Alternatively or in addition, the extreme leading edge portion may be further tilted with respect to the remainder of the portion 11, thereby creating a complex configuration in which, for example, the major part of the leading edge portion 11 assumes the preferred attack angle of 37 degrees but the extreme leading edge portion assumes greater attack angle of (say) 47 degrees.

It will be appreciated that the blade member 8 may have differing shapes and profiles from those shown in the drawings, provided that it is configured to normally lie flat, in its lowered position, to be automatically lifted to its raised (operating) position by engagement with the ingredients upon its leading edge (with respect to the rotational direction used for mixing or kneading), and to automatically resume its lowered position in response to the reversal of the rotational direction of the motor.

## Claims

1. A blade arrangement for mixing, kneading and/or stirring ingredients in a bread-making kitchen appliance, comprising a blade member (8) formed with first and second substantially planar portions (11, 9) thereof, wherein said first portion (11) is a leading portion of said blade member (8) with respect to a first direction of motion of said blade member relative to said ingredients, intended for mixing, kneading or stirring said ingredients, and wherein said first portion (11) is inclined to said second portion (9) in a sense tending to cause said blade member to assume a relatively upright mixing position with respect to said ingredients when rotated in said first direction.

2. A blade arrangement for mixing, kneading and/or stirring ingredients in a bread-making kitchen appliance, comprising a blade member (8) formed with first and second substantially planar portions (11, 9) thereof, wherein said first portion (11) is a leading portion of said blade member (8) with respect to an intended direction of motion of said blade member relative to said ingredients, and wherein said first portion (11) is inclined to said second portion (9) at an angle in the range from 27 degrees to 47 degrees inclusive in a sense tending to cause said blade member (8) to assume a mixing position with respect to said ingredients when rotated in said direction.

3. An arrangement according to claim 2 wherein said angle of inclination of said first and second portions (11, 9) to one another is 37 degrees.

4. An arrangement according to any preceding claim mounted for bi-directional rotation within a container in which ingredients are to be mixed, kneaded and/or otherwise processed.

5. An arrangement according to claim 4 adapted and configured such that, in the presence of said ingredients, rotation in one direction causes the blade member (8) to assume said raised position and rotation in the other direction causes the blade member (8) to assume the lowered position.

6. An arrangement according to any preceding claim wherein the blade member (8) is hingedly mounted (15) relative to the base (2) of said container (1) and has a substantially flat surface (10), adapted to lie adjacent said base (2) when the blade member (8) assumes said lowered position.

7. An arrangement according to any preceding claim wherein a rear surface of that portion (11) of the blade member which supports the leading edge is coated (16) with a slick material such as polytetrafluoride (PTFE) provided to facilitate the movement of the blade member (8) relative to the prepared mixture in the container when the blade member (8) has returned to its lowered (rest) position after a mixing cycle.

8. An arrangement according to any preceding claim wherein the extreme leading edge of said leading edge portion (11) is chamfered so as to thin said extreme leading edge.

9. An arrangement according to any preceding claim wherein the extreme leading edge of said leading edge portion (11) is further tilted with respect to the remainder of the leading edge portion, thereby creating a complex bend.

10. A bread-making kitchen appliance incorporating a blade arrangement according to any preceding claim and means for mounting the same at or near the base of a container (1) in which said ingredients can be processed.

11. An appliance according to claim 10 including means for effecting a change in rotational direction of the motor automatically at a predetermined point in the bread-making cycle.

12. An appliance according to claim 10 including means for effecting a change in rotational direction of the motor under manual control of a user.

13. An appliance according to claim 12 wherein user actuation of said manual control is prompted by audible and/or visual warning means.
